# EUROPEAN PATENT APPLICATION

(11) **EP 2 169 976 A1**
(43) Date of publication of application: **31.03.2010**
(21) Application number: 08777282.8
(22) Date of filing: 17.06.2008
(51) Int. Cl.: H04Q 1/00

(54) **MOBILE COMMUNICATION SYSTEM AND CALL/SESSION CONTROL APPARATUS**

(30) Priority: 28.06.2007 JP 2007170805
(71) Applicant: Sharp Kabushiki Kaisha, Osaka-shi, Osaka 545-8522 (JP)
(72) Inventor: MORIWAKI, Tetsuro, Osaka 545-8522 (JP); HIBI, Keiichi, Osaka 545-8522 (JP)
(74) Representative: Müller - Hoffmann & Partner
(86) International application number: PCT/JP2008/061044
(87) International publication number: WO 2009/001714

(57) **Abstract**

In a mobile communications system including communication domains for both circuit switched network and packet switched network, CSCF 30 and MSC 40 for controlling call connection and session connection between communication terminals, a callee terminal select server 10 and a domain select server 20 are disposed. When a terminal initiates a session, domain select server 20 selects the communication domain through which connection is set up, and callee terminal select server 10 selects the callee side terminal based on the selection result. Accordingly, even in the mobile communications systemprovided with the callee terminal select server and the domain select server individually, it is possible to provide a mobile communications system or the like which can appropriately select the domain and the terminal.

## Description

### Technical Field

The present invention relates to a mobile communications system and a call and session control apparatus.

### Background Art

In recent years, with the diversification of mobile communication networks, various forms of terminals that are connected to the networks also have been diversified. Users tend to own and use a plurality of terminals corresponding to diversified mobile communication networks. The user who owns a plurality of terminals can use terminals for different tasks, e.g., one terminal for speech services, one terminal for data communication services, etc., by giving priority to different terminals, depending on user preference and terminal capability.

Usually, the mobile communication networks are made up of network using circuit switching and network using packet switching. When a mobile communication terminal sets up a call and session, the terminal connects to both or one of them to set up a route to establish the call and session (see patent document 1, for example).

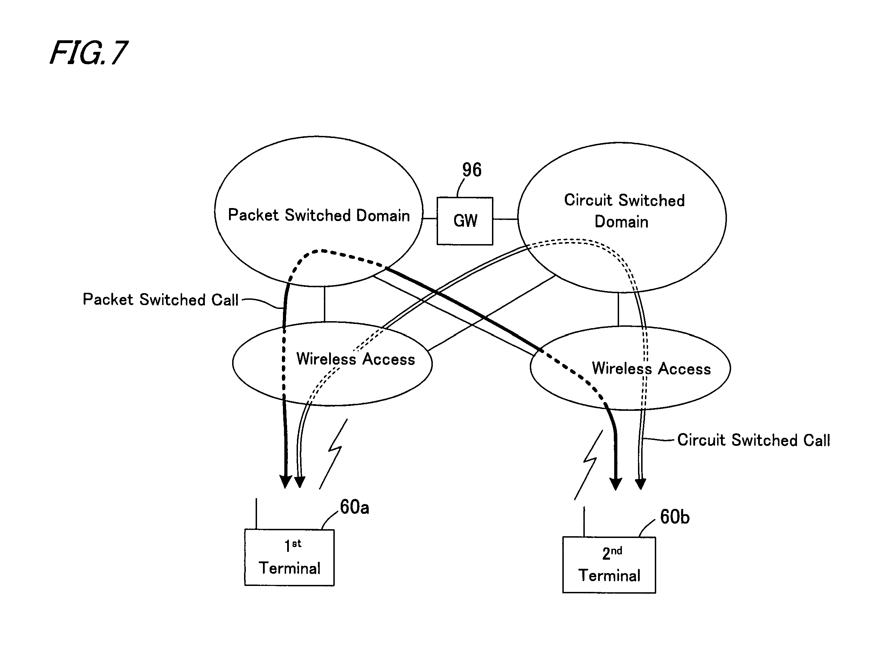

For example, a schematic configuration of conventional mobile communication networks is shown in FIG. 7. In FIG. 7, a first terminal 60a and a second terminal 60b are each connected to a packet switched domain and a circuit switched domain by way of wireless access means. Herein, both circuit switchednetworks and packet switched networks coexist, so that the former as a whole is called the circuit switched domain and the latter as a whole is called the packet switched domain, in distinction from each other.

A call of a terminal from the circuit switched domain arrives as a calling signal of a circuit switched call from the circuit switched domain on the caller side, by way of the circuit switched domain to which the correspondent communication terminal is connected. A call of a terminal from the packet switched domain also arrives as a calling signal of a packet switched call by way of the packet switched domain. When communication is executed by way of the packet switched domain and circuit switched domain, communication takes place via a GW. For example, when a first terminal 60a and a second terminal 60b are connected to the packet switched domain and the circuit switched domain, respectively, communication between the terminals is effected via a GW 96.

Here, it is a usual that each domain is provided with a session control apparatus. The session control apparatus controls calls and sessions between communication terminals. A CSCF (Call Session Control Function) provides the function of the session control apparatus in the packet switched domain, and an MSC (Mobile Services Switching Center) provides the function of the session control apparatus in the circuit switched domain.

Here, when receiving a call, there is a question of which terminal should be selected from a plurality of terminals owned by the user to receive the call and set up a session. To deal with this, the mobile communication network is provided with a callee terminal select server that selects the callee side communication terminal that is made to receive a call and set up a session, from the plurality of communication terminals.

As the function of the callee terminal select server, when the user owns a plurality of communication terminals, etc., the server manages the degrees of priority with which each of the multiple communication terminals should accept a call and session and selects the communication terminal that is given high priority as the callee terminal. The degrees of priority of the communication terminals are designated by the user, depending on the preference for the terminal the user wants to use.

Further, the callee terminal select server may designate the degree of priority depending on the type of the service to be received, by considering the capacities of the access means and the like of the plurality of communication terminals. For example, the server puts priority on the terminal having an access means with a high data transfer capacity in the case of a high volume data communication service, or puts priority on the terminal having an access means suitable for fast movement in the case of a speech service.

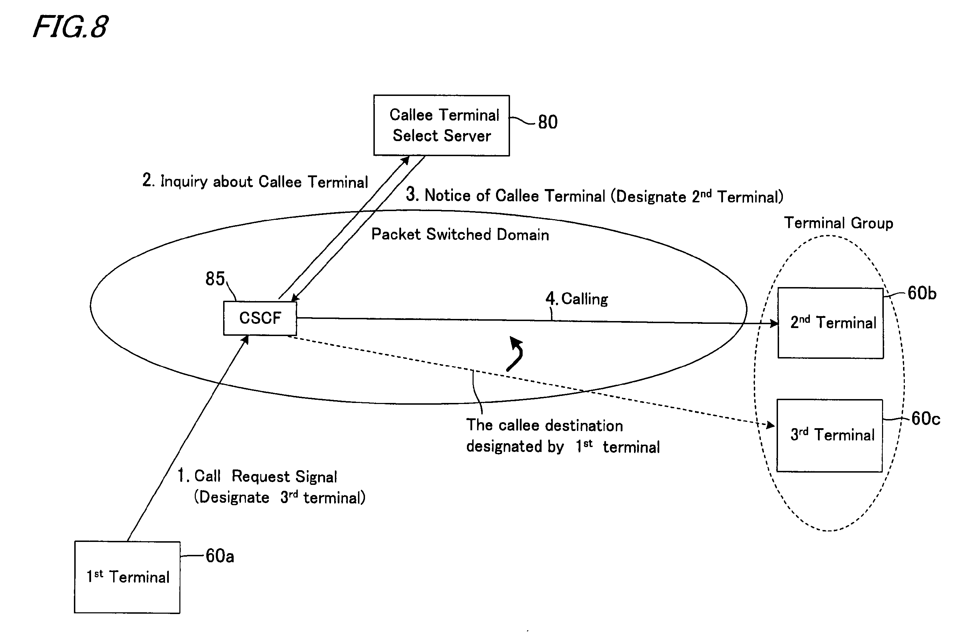

Now, the outline of the callee terminal select server will be described with reference to FIG. 8. To begin with, in FIG. 8, first terminal 60a transmits a call request signal that is designated to call a third terminal 60c to a CSCF 85 (Step 1). CSCF 85 makes an inquiry to callee terminal select server 80 about the callee terminal (Step 2) . Herein, callee terminal select server 80 determines that third terminal 60c is a terminal that is owned by the user who owns second terminal 60b (the terminals that are owned by an identical user in this case will be called "terminal group", hereinbelow).

Then, from the terminal group, callee terminal select server 80 determines the terminal that should be the callee (here, second terminal 60b is assumed to be the one) and gives notice of the callee terminal to CSCF 85 (Step 3) . CSCF 85 calls second terminal 60b that has been given notice to callee terminal select server 80 so as to initiate a session between first terminal 60a and second terminal 60b (Step 4).

Further, the mobile communications network includes a domain select server which, when a call and session to a communication terminal is set up, selects either the circuit switched domain or the packet switched domain that is used to relay as the communication path from the caller side to the callee side.

Conventionally, the circuit switched domain is mainly used to set up a call and session for speech services while the packet switched domain is used to set up a call and session for multimedia services for text, image data, etc. However, in recent years, speech services have been offered in the packet switched domain as in the VoIP technology and the like. Accordingly, the domain select server of the mobile communication network can select either the circuit switched domain or the packet switched domain to set up communication therethrough, depending on the state of network load or the like.

For example, when a terminal sets about a call from the circuit switched domain but the domain select server selects a communication route by way of a packet switched domain, the circuit switched call signal is converted to a packet switched call signal by means of a gateway (GW) that mutually connects between the circuit switched domain and the packet switched domain. The terminal on the called side receives this call in the form of a packet switched call signal and initiates a session by way of the packet switched domain.

The domain select server can select the less congested domain based on the states of congestion of the domains (the states of resource usage or the like).

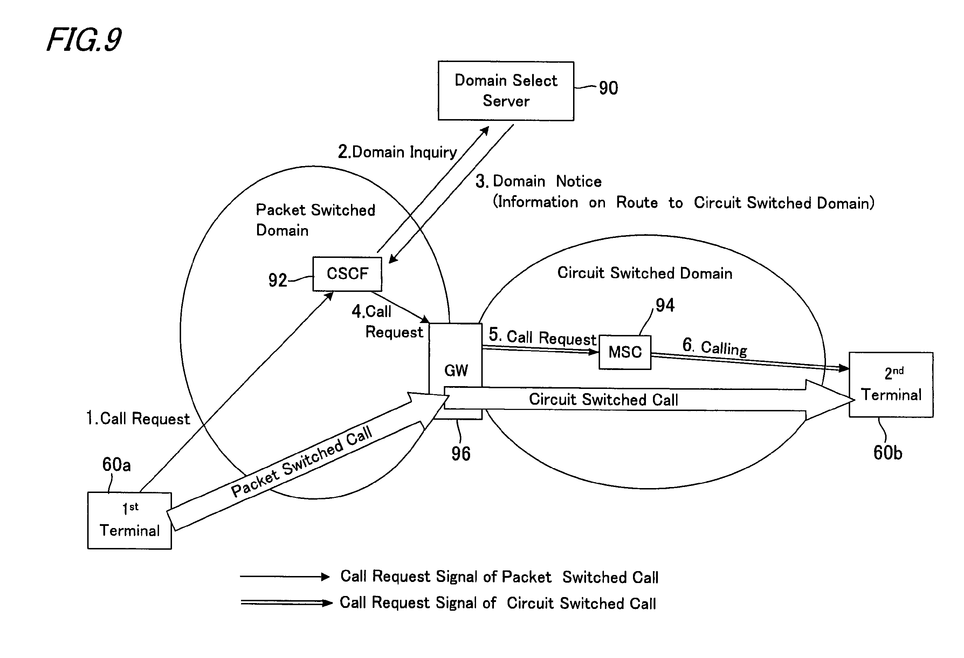

Now, the outline of the domain select server will be described using FIG. 9. In FIG. 9, when the caller side terminal (first terminal 60a) connects to the packet switched domain and sets about a call by designating the telephone number of a callee terminal or the like, a CSCF 92 receives a call request signal (Step 1). Then, before calling the callee terminal (second terminal 60b), the CSCF makes an inquiry to a domain select server 90 about the domain through which the call and session should be set up (Step 2).

Then, domain select server 90 selects the domain (circuit switched domain) to be the path and notifies CSCF 92 of the domain (Step 3). When CSCF 92 receives a notice that the circuit switched domain should be selected, from domain select server 90, the CSCF submits a call request to GW 96 (Step 4).

GW 96, as receiving the call request from CSCF 92, transmits a call request signal to an MSC 94 which is the session control apparatus of the circuit switched domain (Step 5). MSC 94, as receiving the call request signal, sets about a call to second terminal 60b (Step 6) . In this way, a call and session is set up between the caller side terminal (first terminal 60a) and the callee side terminal (second terminal 60b), the packet switched call is converted by GW 96 into a circuit switched call, which reaches second terminal 60b as shown by block arrows.

Here, though the aforementioned callee terminal select server 80 and domain select server 90 are application servers, which process circuit switched calls and packet switched calls, these aim at different purposes, hence are configured separately and operate independently. The domain selecting process at domain select server 90 is executed for all calls from terminals, whereas the callee terminal selecting process at callee terminal select server 80 is executed when a plurality of terminals exist in a grouped condition, e.g., when the callee terminal is used with other terminals by one user or in similar cases, and will not be effected when the terminal is used alone.
Patent document 1:
   Japanese Patent Application Laid-open 2006-80693

### Disclosure of Invention

### Problems to be Solved by the Invention

When the aforementioned callee terminal select server and the domain select server exist together on the mobile communication network and operate individually, the following problems would occur.

For example, there is a case where, though the callee terminal select server has selected a terminal that is suitable for packet switching as the callee destination of a speech call, the domain select server selects to lead this speech call through the circuit switched domain. Also in this case, the selection results of the two do not match, hence appropriate communication cannot be established.

Also, there is a case where, though the domain select server has selected the circuit switched domain, the callee terminal select server selects a terminal dedicated for packet switching or the like, that is, a terminal that can be connected to the packet switched domain only as a callee. In this case, the selection results do not match, hence appropriate communication cannot be established.

Further, the domain select server makes domain selection on the assumption that the callee side terminal is determined while the callee terminal select server selects a callee side terminal without depending on the type of the requested call/session (circuit switched call or packet switched call). Accordingly, no problem will occur if only one of the two functions operates independently, but there occurs the problem that if one of the two is not determined the other cannot be determined when the two functions operate in parallel.

Moreover, even if one of the domain selecting process by the domain select server and the callee side terminal selecting process by the callee terminal select server is determined first and then the other is determined, this will not produce the optimal selection result. For example, if, even though the domain select server selects the circuit switched domain in order to secure telephonic communication quality, the callee terminal select server selects a terminal that can perform fast packet transmission, pertinent result could not be obtained in some cases because there is a possibility that high quality service can be offered to this terminal when transmission is executed through the packet switched domain.

In view of the above circumstances, it is therefore an object of the present invention to provide a mobile communications system and the like, including a callee terminal select server and a domain select server separately, in which an appropriate domain and terminal selection can be achieved.

### Means for Solving the Problems

In view of the above problem, a mobile communications system of the present invention includes: communication domains for both a circuit switched network and a packet switched network; a call and session control apparatus controlling a call connection and a session connection between communication terminals; a relaying domain selecting apparatus, determining which communication domain is used to establish connection, and notifying the call and session control apparatus; a callee terminal selecting apparatus selecting the terminal to be connected as a callee destination; and, a communication terminal to be connected via the communication domain, and is **characterized in that** the call and session control apparatus, when receiving a call and session connecting request from a communication terminal, determines an order of which inquiry should be performed first between the inquiry about a relaying domain to the relaying domain selecting apparatus and the inquiry about a callee destination communication terminal to the callee terminal selecting apparatus.

The call and session control apparatus in the mobile communications system of the present invention performs the inquiry to the relaying domain selecting apparatus first and notifies the callee terminal selecting apparatus of a selection result of a relaying domain given in reply from the relaying domain selecting apparatus when performing the inquiry to the callee terminal selecting apparatus.

The call and session control apparatus in the mobile communications system of the present invention performs the inquiry to the relaying domain selecting apparatus first, and omitting the inquiry from the call and session control apparatus to the callee terminal selecting apparatus when only one relaying domain to be used is given in reply as a selection result from the relaying domain selecting apparatus.

The call and session control apparatus in the mobile communications system of the present invention omits the inquiry from the call and session control apparatus to the callee terminal selecting apparatus when the other communication domain than the communication domain through which the call and session connecting request was sent from the calling communication terminal is selected as the relaying domain.

The call and session control apparatus in the mobile communications system of the present invention performs the inquiry to the relaying domain selecting apparatus first when the communication terminal on the caller side performed the call and session connecting request through the circuit switched network.
The call and session control apparatus in the mobile communications system of the present invention performs the inquiry to the relaying domain selecting apparatus first when the state of connection of the network to which a callee communication terminal is connected is congested.

The call and session control apparatus in the mobile communications system of the present invention performs the inquiry to the callee terminal selecting apparatus first when the communication terminal on the caller side performed a call and session connecting request from the packet switched network.

Also, a call and session control apparatus of the present invention is connected to a mobile communications system including: communication domains for a circuit switched network and a packet switched network; a relaying domain selecting apparatus determining which communication domain is used to establish connection; a callee terminal selecting apparatus selecting a terminal to be connected as a callee destination; and a communication terminal to be connected via the communication domain. The call and session control apparatus comprises: a receiving means for receiving a call and session connecting request from the communication terminal; and a determining means which, when the call and session connecting request was received, determines an order of which inquiry should be performed first between the inquiry about a relaying domain to the relaying domain selecting apparatus and the inquiry about a callee communication terminal to the callee terminal selecting apparatus. The inquiries are performed based on the order determined by the determining means so that a call connection and a session connection between communication terminals are controlled based on the result of the inquiries.

### Advantage of the Invention

According to the present invention, in the mobile communications system, even when the domain select server and the terminal select server coexist, it is possible to resolve the discrepancy and the like between the selection results from the two servers and realize effective cooperation of the two servers.

Further, since the domain is selected and confirmed first by putting importance on the communication quality of a requested speech call or the like and taking into account the state of network congestion and then the callee communication terminal to initiate a session on the selected domain is selected, it is possible to provide a service with stable quality and secure communication reliability.

Further, since the order of domain selection and terminal selecting processes can be altered by taking into account the state of network congestion and the terminal selecting process may be omitted taking into account the domain selection result, it is possible to realize a system with high flexibility.

### Brief Description of Drawings

[FIG. 1] is a diagram showing the outline of a mobile communications system.
[FIG. 2] is a diagram showing the configuration of a callee terminal select server and a domain select server.
[FIG. 3] is a diagram showing conditions when a policy in speech telephony is applied.
[FIG. 4] is a diagram for illustrating the operation when a policy is applied.
[FIG. 5] is a diagram showing the operation flow of the mobile communications system.
[FIG. 6] is a diagram showing the operation flow of the mobile communications system.
[FIG. 7] is a diagram for illustrating modes of domain selection.
[FIG. 8] is a diagram for illustrating a conventional mobile communications system.
[FIG. 9] is a diagram for illustrating a conventional mobile communications system.

### Description of Reference Numerals

- 10: callee terminal select server
102 priority storage
104 terminal information manager
106 CSCF/MSC notifier
- 20: domain select server
202 domain selecting policy storage
204 domain manager
206 CSCF/MSC notifier
- 30: CSCF
302 session connecting request receiver
304 inquiry selector
- 40: MSC
402 session connecting request receiver
404 inquiry selector
- 50: GW
- 60a: first terminal
- 60b: second terminal
- 60c: third terminal

### Best Mode for Carrying Out the Invention

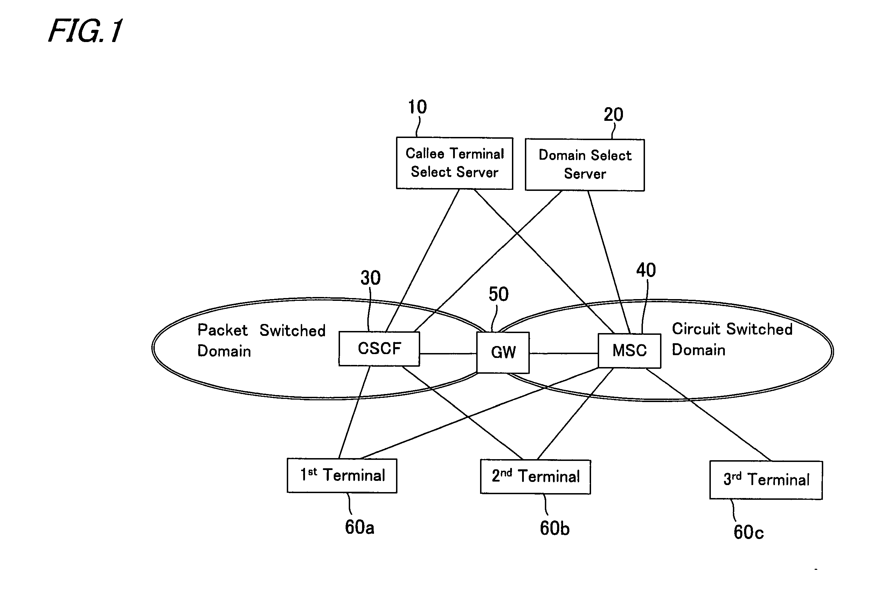

To begin with, the mobile communications system when the present invention is applied will be described with reference to the drawings. FIG. 1 is a diagram showing the configuration of a mobile communications system. The mobile communications system is configured by inclusion of a CSCF 30 (call and session control apparatus) for controlling packet switched calls and sessions, an MSC 40 (switchboard) for controlling circuit switched calls and sessions and a callee terminal select server 10 and a domain select server 20, as application servers for controlling CSCF 30 and MSC 40.

A GW 50 (gateway) that mutually connects between the two domains are provided. Terminals 60 will perform communication by accessing CSCF 30 or MSC 40. In the mobile communications system in FIG. 1 a first terminal 60a, second terminal 60b and third terminal 60c are disposed.

Data of a circuit switched call is transmitted by occupying the channel on the path that is set up by MSC 40 while data of a packet switched call is transmitted in the form of packets through the path that is set up by CSCF 30. When data is transmitted striding over the domains, conversion between circuit switched call and packet switched call is performed by GW 50 and data is transmitted and received via GW 50.

Terminal 60 connects to both domains or one of the two domains, In FIG. 1, first terminal 60a and second terminal 60b are each connected to the two domains. On the other hand, third terminal 60c is, for example a telephone terminal dedicated for circuit switching, and is connected to the circuit switched domain only. Further, in the present embodiment, second terminal 60b and third terminal 60c are terminals (belonging to a terminal group) that are owned by an identical user.

Here, when a single user owns a plurality of terminals or in a similar case, callee terminal select server 10 manages the plurality of terminals as a terminal group of the user, and manages the degrees of priority for received calls. In the case of FIG. 1, second terminal 60b and third terminal 60c are managed as belonging to a terminal group.

CSCF 30 or MSC 40, when receiving a call to the terminal group (or any one of the terminals included in the group), performs an inquiry to callee terminal select server 10. Then callee terminal select server 10 selects one terminal to be the destination of the call, from the group and returns the selection result to CSCF 30 or MSC 4 0 that performed the inquiry.

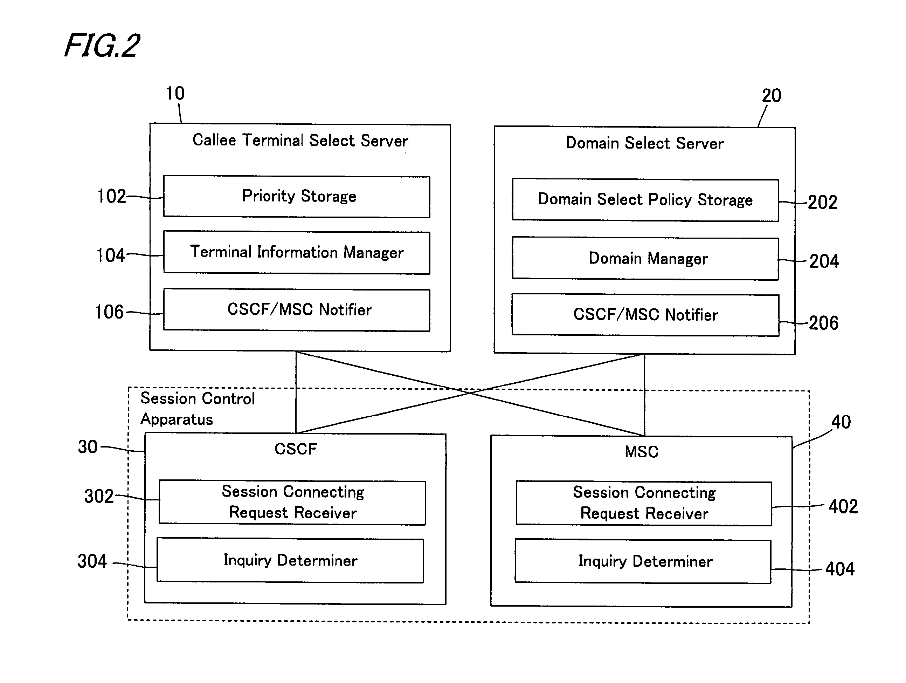

Here, a functional and configurational diagram of callee terminal select server 10 and domain select server 20 and the session control apparatus (CSCF 30 or MSC 40) is shown in FIG 2. As shown in FIG. 2, callee terminal select server 10 includes a priority storage 102, a terminal information manager 104 and a CSCF/MSC notifier 106. Domain select server 20 includes a domain select policy storage 202, a domain manager 204 and a CSCF/MSC notifier 206. The session control apparatus (CSCF 30 or MSC 40) at least includes a session connecting request receiver which receives a session connecting request from terminal 60 and an inquiry selector. Specifically, the session control apparatus, if it is CSCF 30, includes a session connecting request receiver 302 and a reference selector 304 and, if it is MSC 40, includes a session connecting request receiver 402 and an inquiry selector 404.

First, priority storage 102 of callee terminal select server 10 is an area for storing a terminal selecting condition table to be used for selecting a terminal to be called. The information in the table is stored and managed by previously receiving notice from the user of the degrees of reception priority of terminals 60 included in the group.

Terminal information manager 104 is a functional portion for managing information associated with each terminal such as whether the terminal can be connected to packet switching or circuit switching, the communication speed and the like, and is also a functional portion for managing a plurality of terminals owned by the user as a terminal group. This information may be given by the user at the same time when the aforementioned notice of the degrees of reception priority of terminals 60 included in the group is given, or callee terminal select server 10 may acquire the information on each of the terminals from HSS that manages subscriber information in the mobile communication network.

For example, in the case of FIG. 1, second terminal 60b and third terminal 60c are managed as one terminal group, and, in addition to the telephone numbers and addresses of second terminal 60b and third terminal 60c, the terminals are managed in association with connectable and available domains, such as whether each terminal is a speech telephony terminal dedicated for circuit switching or a personal computer dedicated for packet switching. Further, in some cases the user can use all the terminals of the terminal group, in other cases the user can use part of them; for example, the user may carry second terminal 60b only while third terminal 60c is put away from the user. Depending on such user situation, the available terminal/terminals from the terminal group at each moment is/are managed.

Here, though the arrival of a call to a terminal 60 included in the terminal group may be either a circuit switched call or a packet switched call, the difference will not be cared about at the time of selection of terminal 60. For example, if the terminal group includes a speech telephony terminal dedicated for circuit switching, which is usually used by the user, and this speech terminal is set to have priority for telephony calls, callee terminal select server 10 selects the speech telephony terminal dedicated for circuit switching as the call destination even if the call from the caller is a packet switched call as long as the call is associated with a telephony service. In this case, the packet switched call is converted into a circuit switched call through GW 50 and the session control apparatus (CSCF or MSC) controls such that the call will reach the speech terminal by way of the circuit switched domain.

There is another case in which the terminal group includes a packet switched dedicated terminal such as a personal computer or the like, and the PC is specified to have priority as the telephony callee destination because the user is sitting in front of the personal computer. In this case, callee terminal select server 10 selects the personal computer as the calling destination even when the call is a circuit switched telephony call, and the session controller (CSCF 30 or MSC 40) makes such control as to convert the circuit switched call into a packet switched call by means of the GW and lead the call to the personal computer by way of packet switched domain.

CSCF/MSC notifier 106 is a functional portion for sending in reply the selection result from callee terminal select server 10 to CSCF 30 or MSC 40.

Next, domain select server 20 will be described. Domain selecting policy storage 202 is a functional portion for storing the selecting policy to select either the circuit switched domain or packet switched domain when a call and session is set up between the terminal and a corresponding terminal.

The selecting policy indicates the network provider side policy, based on which the domain to be used is determined depending on the trade-off between the demanded service quality of the terminal and the resource condition of the domain, the user contract style and other conditions.

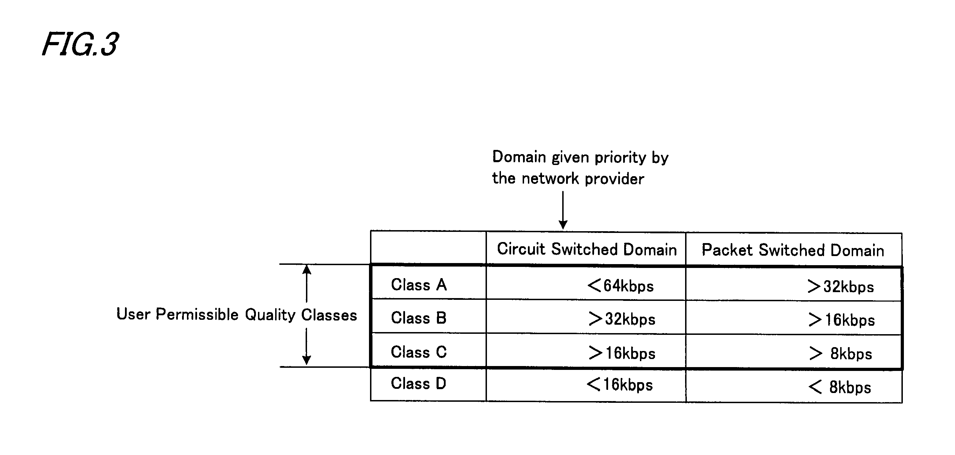

As one example, in order to provide a session of pertinent communication quality, in some cases the network provider may adopt a policy based on which speech telephony always gives priority to the bandwidth-guaranteed circuit switched domain. Here, FIG. 3 shows one example of a selecting policy table for speech telephony. This example is a policy based on which the network provider gives priority to the circuit switched domain, and in the table, the quality of speech telephony is classified into A to D, depending on parameter values such as delay, error rate and the like.

Then, the necessary resource (bandwidth) in the domain for satisfying the quality of each class is designated. Further, from the user contract style etc., the communication quality class permitted by the user ranges from A to C.

In the case of the aforementioned selecting policy, the resource condition of the circuit switched domain is checked, and if the resource satisfies the condition from class A to C, the circuit switched domain is selected. Here, other than the policy for speech telephony, the quality class for video telephony including video etc., is different from that of speech telephony, hence domain selecting policy storage 202 stores selecting policies corresponding such different types of calls and sessions.

Domainmanager 204 is a functional portion for managing the resource conditions of the domains. For example, the manager manages the state of each domain (resource conditions such as available bandwidth etc. ) such as whether each domain is congested or not.

CSCF/MSC notifier 206 is a functional portion for giving the selection result in replay from domain select server 20 to CSCF 30 or MSC 40. Herein, domain select server 20 gives information as to whether the packet switched domain or the circuit switched domain has been selected, as preference information when the selection result is given in reply to CSCF 30 or MSC 40 as the session control apparatus. This information will be used in callee terminal select server 10 at the time of selecting a callee side terminal.

Further, the session control apparatus, when a session connecting request is given from terminal 60, receives the request at the session connecting request receiver, and includes an inquiry determiner which, for the session connecting request, determines whether an inquiry to the domain selecting server should be performed first. In FIG. 2, this request is received by session connecting request receiver 302 in the case of CSCF 30 and by session connecting request receiver 402 in the case of MSC 40.

The function offered by domain select server 20 is basically applied to connecting requests for speech sessions. This is because speech services can be commonly offered in both the circuit switched domain and the packet switched domain. Accordingly, inquiry determiner 404 of MSC 40 that mainly handles speech services based on circuit switching, always determines to perform the inquiry to domain select server 20 first because all the session connecting requests are requests for speech sessions. Then, the determiner performs an inquiry to callee terminal select server 10.

When a notice of the domain selection result from domain select server 20 is received and the information that the selected domain is the only domain to be used by the callee terminals is given, MSC 40 omits the inquiry to callee terminal select server 10 after the inquiry to domain select server 20. For example, this plays such a role that, once the packet switched domain is selected as the domain for the callee destination when data cannot be transmitted due to a restriction on the path such as the circuit switched domain is being crowded and the resource is being occupied, a terminal etc., dedicated for circuit switching is prevented from being inconsistently selected depending on the inquiry result to callee terminal select server 10. That is, this provides the function of giving the highest priority to the conditions of the domains on the network side.

In inquiry determiner 304 of CSCF 30 that also handles other packet switched multimedia sessions of video etc., in addition to speech, there occurs the necessity of inquiries to both domain select server 20 and callee terminal select server 10 only when a speech session is handled. Accordingly, when the calling terminal requests a session connection of a packet switched call, inquiry determiner 304 of CSCF 30 determines that the inquiry to domain select server 20 should be performed first when the session is speech.

Further, when a session other than speech sessions, especially, a non-speech or media type session that cannot be presented in the circuit switched domain is handled, inquiry determiner 304 of CSCF 30 determines that only the inquiry to callee terminal select server 10 will be performed without performing the inquiry to domain select server 20.

Similarly to MSC 40, when a notice of the domain selection result from domain select server 20 is received and information that the selected domain is the only domain to be used by the callee terminals is given, CSCF 30 omits the inquiry to callee terminal select server 10 after the inquiry to domain select server 20.

Alternatively, for further simplicity, even if there is no information that the selected domain is the only domain to be used by the callee terminal, when domain select server 20 has selected the circuit switched domain as the callee destination for a connecting request of a packet switched session, inquiry selector 404 of CSCF 30 may omit the inquiry to callee terminal select server 10 after the inquiry to domain select server 20.

Further, inquiry determiner 304 of CSCF 30 is also **characterized in that** the order of inquires for domain selection and terminal selection is altered based on the state of congestion of the packet switched domain. CSCF 30 also functions as an advance registration server for terminals to set up a session, and CSCF 30 to which the callee terminal is registered, may have a plurality of other terminals registered.

Thereupon, if the number of registrations is within a fixed number, the CSCF 30 determines to perform an inquiry to callee terminal select server 10 first, and determines to perform an inquiry to domain select server 20 first if the number of registrations exceeds the fixed number. Since the resource condition of the packet switched domain can be estimated to some degree in CSCF 30 from the number of user registrations to CSCF 30, performing, in advance, an inquiry from CSCF 30 to domain select server 20 that manages the domain conditions, plays a role to give the highest priority to domain determination.

Terminal 60 is connected to both the circuit switched domain and the packet switched domain or one of the domains.

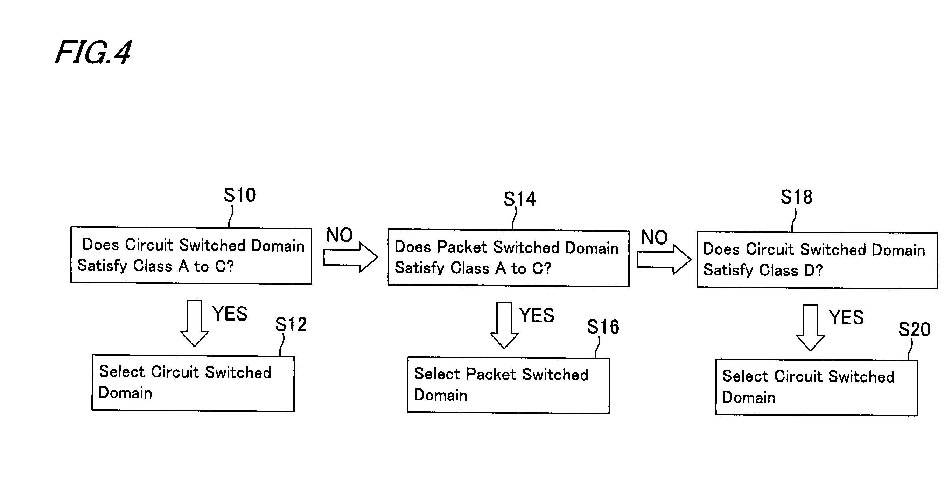

FIG. 4 shows one example of an operation flow for selecting the callee domain (circuit switched or packet switcheddomain) at domain select server 20. The domain select server has stored in domain selecting policy storage 202 that the policy gives priority for speech calls to the circuit switched domain and that the user' s permissible quality class ranges A to C. Further, domain manger 204 manages the resource conditions of the circuit switched domain and the packet switched domain.

As receiving from the session control apparatus (CSCF 30 or MSC 40) an inquiry about the callee destination domain for a speech call, domain select server 20 first checks the resource condition of the circuit switched domain that is managed by domain manger 204 because the policy of the domain, stored in domain selecting policy storage 202 indicates the circuit switched domain.

Then, when the circuit switched domain has a resource that satisfies the user's permissible quality ranging from classes A to C, the circuit switched domain is selected as the callee destination domain (Step S10; Yes -> Step S12 in FIG. 4).

When the circuit switched domain has no resource that satisfies the permissible quality ranging from classes A to C (Step S10; No), the resource condition of the packet switched domain is checked. Then, if the packet switched domain has a resource that satisfies the permissible quality ranging from classes A to C, the packet switched domain is selected (Step S14; Yes -> Step S16 in FIG. 4).

Further, when the circuit switched domain or packet switched domain does not stratify class C or better but the circuit switched domain has a resource that satisfies class D, the circuit switched domain is selected (Step S14; No -> Step S18; Yes -> Step S20).

Domain select server 20 causes CSCF/MSC notifier 206 to give notice of the selection result that has been finally selected, to the session control apparatus.

Here, if the circuit switched domain cannot satisfy class D even at Step S18, communication is cut off and the connecting process will be repeated until the circuit switched domain or the packet switched domain satisfies the predetermined quality class or better.

### [Operational Example]

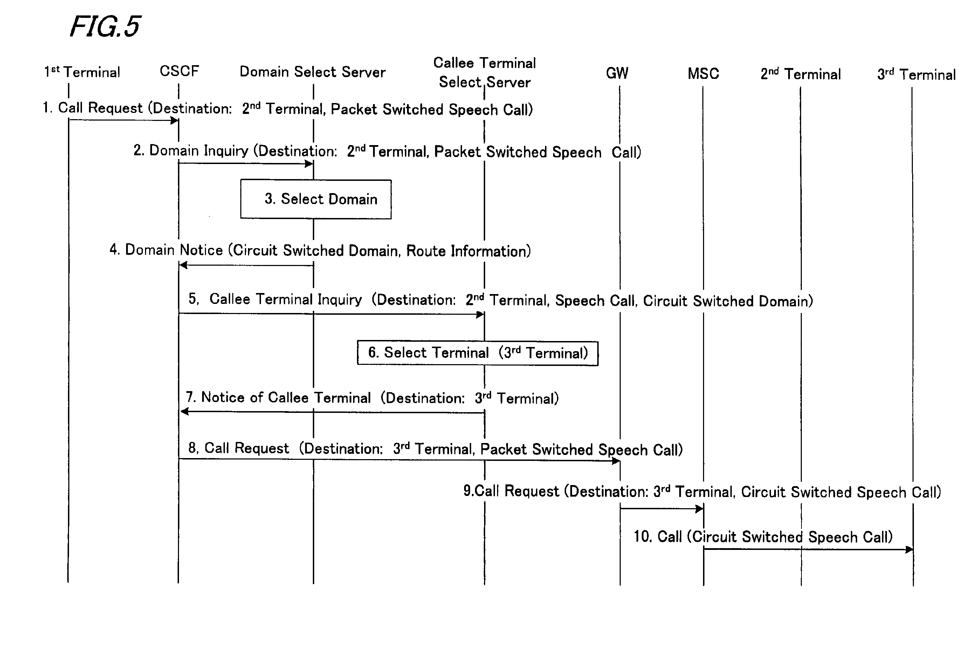

Now, as one example, the control procedure of a case where first terminal 60a sets about a packet switched speech call to second terminal 60b will be described using FIG. 5. Here, description will be given on the assumption that third terminal 60c is owned by the same user of the second terminal 60b and third terminal 60c has a higher reception priority for a speech call than second terminal 60b.

First, when a call request of a packet switched speech call for second terminal 60b is sent from first terminal 60a to CSCF 30 (Step 1), CSCF 30 inquires of domain select server 20 about the domain to set up a call and session by this call request (Step 2).

Domain select server 20 selects a domain based on the channel conditions at that moment, and notifies CSCF 30 of the selected domain. In this case, the circuit switched domain is selected as the relaying domain because of insufficiency of the processing capacity of the packet switched domain or other reasons (Step 3), and the selection result is notified to CSCF 30 (Step 4). Here, it is assumed that this notice includes information on the route that relays to the circuit switched domain.

CSCF 30, as receiving the domain selection result, inquires of callee terminal select server 10 about the terminal to be the callee destination (Step 5). This inquiry is included with information that second terminal 60b is designated as the callee destination, that the type of the call and session is a speech call and that the domain selected by the relaying domain select server is the circuit switched domain.

Subsequently, callee terminal select server 10 selects third terminal 60c that has higher reception priority for speech calls (Step 6), and notifies CSCF 30 that the selection result is third terminal 60c (Step 7). This notice includes the destination address of third terminal 60c to be the callee destination.

Here, since domain select server 20 has selected the circuit switched domain, if third terminal 60c is a terminal dedicated for packet switching, callee terminal select server 10 will not select third terminal 60c even if third terminal 60c is given priority. In such a case, second terminal 60b is selected and the fact that the selection result is second terminal 60b is notified to CSCF 30. Since in this case the callee destination is not changed, there is no need to include the destination address of second terminal 60b in the notice.

CSCF 30, based on the information on the route to the relaying circuit switched domain, submits a request for a call to MSC 40 via GW 50 (Step 8 and Step 9), and notifies of the address of third terminal 60c as the callee destination. MSC 40 calls third terminal 60c (Step 10).

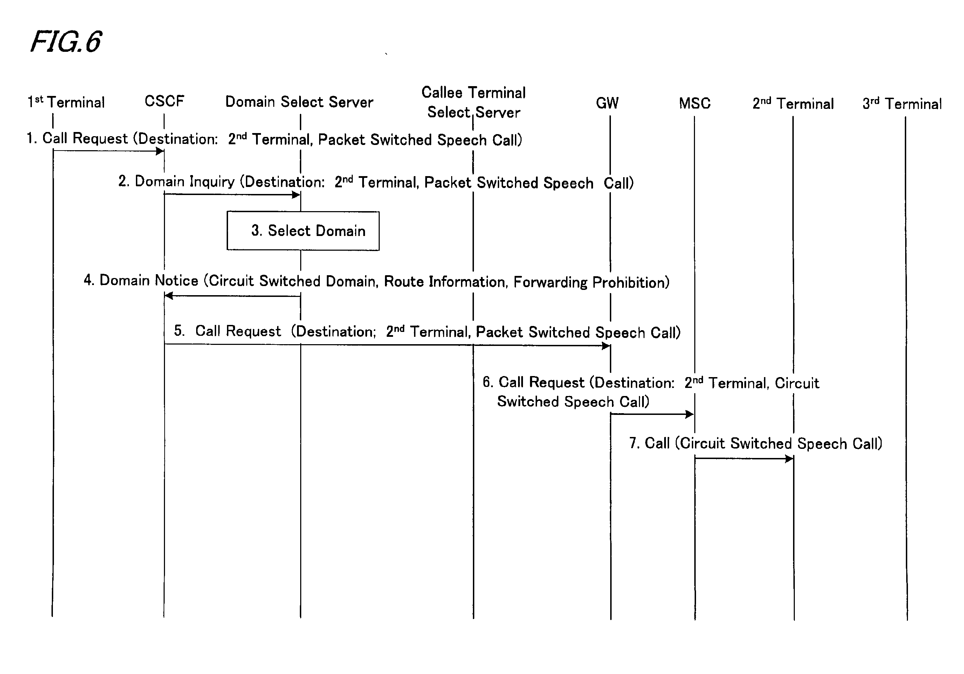

Next, as another operational example, another control procedure will be described using FIG. 6. First, when a call request of a packet switched speech call for second terminal 60b is given from first terminal 60a to CSCF 30 (Step 1), CSCF 30 inquires of domain select server 20 about the domain that relays this call request (Step 2).

Domain select server 20 selects the circuit switched domain (Step 3) and notifies CSCF 30 of the selection result (Step 4). This notice includes the information on the route for relaying to the circuit switched domain. Further, the notice of the selection result is included with information for prohibiting the call from being forwarded to other than second terminal 60b.

Receiving the domain selection result, CSCF 30 also looks the information on prohibition against forwarding to other than second terminal 60b, and skips the step of inquiring of callee terminal select server 10. Then, based on the route information, the CSCF submits a request for a call of a circuit switched call to second terminal 60b, to MSC 40 of the circuit switched domain via GW 50 (Steps 5 and 6). MSC 40 performs a circuit switched call to second terminal 60b (Step 7).

### [Variational Example]

Herein, the mobile communications system of the present invention is not limited to the above-described embodiment modes, but it goes without saying that various changes can be added without departing from the scope of the present invention.

Further, though the above embodiment modes were described mainly taking examples where the calling terminal gives a packet switched call to CSCF 30, it goes without saying that the procedures will be the same when the calling terminal submits a request for a circuit switched call to MSC 40.

Further, in the description heretofore, the function provided by domain select server 20 is basically applied to sessions of speech services. This is because speech services can be commonly offered in both the circuit switched domain and the packet switched domain.

Therefore, the configuration can be made simple if MSC 40 that mainly handles circuit switched speech services is adapted to always inquire of domain select server 20 for all the call requests. Then, subsequently an inquiry to callee terminal select server 10 is performed. This inquiry is performed with a notice of the selection result at the main select server, so that the callee terminal can be selected on the premise of the domain that was selected at the time of callee terminal selection.

That is, if the domain which domain select server 20 selected is the circuit switching, domain callee terminal select server 10 will not select the terminal dedicated for packet switching even if the packet switched terminal is given higher priority. In this case, the terminal having higher priority for circuit switched calls is selected.

In CSCF 30 that also handles other packet switched multimedia sessions in addition to speech calls, there occurs the necessity of inquiring of both domain select server 20 and callee terminal select server 10 only when a speech service is handled. When the calling terminal requests to set up a packet switched call, CSCF 30 implements a step of checking whether the session is a speech call or other than speech calls, and inquires of domain select server 20 to perform a domain selecting process if the session is a speech call. Then, the CSCF further performs an inquiry including a domain selection result notice to callee terminal select server 10 and performs a terminal selecting process. For a call other than speech calls, it is determined that only the inquiry to the callee terminal select server is performed.

Further, CSCF 30 changes the order of inquiries to the domain select server and the callee terminal select server, depending on the state of congestion of the packet switched domain (network). When the number of user registrations to CSCF 30 exceeds a fixed level, the CSCF 30 determines to perform an inquiry to domain select server 20 first. Domain select server 20 selects to use either the packet switched domain or the circuit switched domain for relaying, based on the actual resource of the packet switched domain to be processed by CSCF 30 and gives notice to CSCF 30. CSCF 30 determines the relaying domain first based on the result and then inquires of the callee terminal select server.

In contrast, when the number of terminals registered to CSCF 30 does not reach the fixed level, the order of inquiries is changed so that the inquiry to callee terminal select server 10 is performed first to determine the callee terminal first and then the inquiry to domain select server 20 is performed.

Further, in order to avoid the intermediary of GW 50 that mutually connects between domains and reduce incoming of traffic of packet switched calls into the circuit switched domain, when the calling terminal submits a request for a packet switched call to CSCF 30, the packet switched domain is supposed to be used constantly, and a terminal capable of handling packet switched calls is selected as the callee terminal. In this way, the order may be modified so as to give priority to terminal selection.

## Claims

1. A mobile communications system comprising:
communication domains for both a circuit switched network and a packet switched network;
a call and session control apparatus controlling a call connection and a session connection between communication terminals;
a relaying domain selecting apparatus, determining which communication domain is used to establish connection, and notifying the call and session control apparatus;
a callee terminal selecting apparatus selecting the terminal to be connected as a callee destination; and,
a communication terminal to be connected via the communication domain, **characterized in that**
the call and session control apparatus, when receiving a call and session connecting request from a communication terminal, establishes connection by determining an order of which inquiry should be performed first between the inquiry about a relaying domain to the relaying domain selecting apparatus and the inquiry about a callee destination communication terminal to the callee terminal selecting apparatus.

2. The mobile communications system according to Claim 1, wherein the call and session control apparatus performs the inquiry to the relaying domain selecting apparatus first and notifies the callee terminal selecting apparatus of a selection result of a relaying domain given in reply from the relaying domain selecting apparatus when performing the inquiry to the callee terminal selecting apparatus.

3. The mobile communications system according to Claim 1, wherein the call and session control apparatus performs the inquiry to the relaying domain selecting apparatus first, and the inquiry from the call and session control apparatus to the callee terminal selecting apparatus is omitted when only one relaying domain to be used is given in reply as a selection result from the relaying domain selecting apparatus.

4. The mobile communications system according to Claim 1, wherein when the other communication domain than the communication domain through which the call and session connecting request was sent from the calling communication terminal is selected as the relaying domain, the call and session control apparatus omits the inquiry from the call and session control apparatus to the callee terminal selecting apparatus.

5. The mobile communications system according to Claim 1, wherein when the communication terminal on the caller side performed the call and session connecting request through the circuit switched network, the call and session control apparatus performs the inquiry to the relaying domain selecting apparatus first.

6. The mobile communications system according to Claim 1, wherein when a state of connection of the network to which the callee communication terminal is connected is congested, the call and session control apparatus performs the inquiry to the relaying domain selecting apparatus first.

7. The mobile communications system according to Claim 1, wherein when the communication terminal on the caller side performed a call and session connecting request from the packet switched network, the call and session control apparatus performs the inquiry to the callee terminal selecting apparatus first.

8. A call and session control apparatus, connected to a mobile communications system including: communication domains for a circuit switched network and a packet switched network; a relaying domain selecting apparatus determining which communication domain is used to establish connection; a callee terminal selecting apparatus selecting a terminal to be connected as a callee destination; and a communication terminal to be connected via the communication domain, comprising:
a receiving means for receiving a call and session connecting request from the communication terminal; and
a determining means which, when the call and session connecting request was received, determines an order of which inquiry should be performed first between the inquiry about a relaying domain to the relaying domain selecting apparatus and the inquiry about a callee communication terminal to the callee terminal selecting apparatus,
wherein the inquiries are performed based on the order determined by the determining means so that a call connection and a session connection between communication terminals are controlled based on the result of the inquiries.
